Europäisches Patentamt

**European Patent Office**

Office européen des brevets

(11) Publication number: **0 001 497**
**B1**

(12) # EUROPEAN PATENT SPECIFICATION

(45) Date of publication of patent specification: **05.08.81**

(21) Application number: **78300444.3**

(22) Date of filing: **02.10.78**

(51) Int. Cl.³: **C 08 L 23/00, C 08 K 3/22, B 23 Q 3/08**

(54) Thermoplastic hot melt compositions and use thereof.

(30) Priority: **03.10.77 US 838488**
**03.10.77 US 838481**

(43) Date of publication of application:
**18.04.79 Bulletin 79/8**

(45) Publication of the grant of the European patent:
**05.08.81 Bulletin 81/31**

(84) Designated Contracting States:
**BE DE FR GB SE**

(56) References cited:
**DE - A - 2 032 775**
**LU - A - 64 144**

(73) Proprietor: **TRW INC.**
**One Space Park**
**Redondo Beach California 90278 (US)**

(72) Inventor: **Speyer, Fred B.**
**24101 Lake Shore Boulevard**
**Euclid Ohio 44123 (US)**

(74) Representative: **Spencer, Graham Easdale**
**A.A. Thornton & CO Northumberland House 303-306, High Holborn**
**London WC1V 7LE (GB)**

Courier Press, Leamington Spa, England.

**0 001 497**

## Thermoplastic hot melt compositions and use thereof

The present invention is concerned with thermoplastic hot melt compositions and with a method of holding a workpiece in workholder usiiig a hot melt composition.

Several methods of holding a workpiece (such as a jet-engine airfoil or blade) in a workholder for machining the workpiece (by drilling, grinding, lapping, milling or tuning, for example) are known. Two such methods are encapsulation and potting of the workpiece. In the former method, the entire workpiece is surrounded by encapsulant, such that as the workpiece is machined, some of the encapsulant is also machined away. In contrast, only selected parts of the workpiece are surrounded by potting compound in the latter method, such that the workpiece can be machined without the tool engaging the potting compound.

It follows that an encapsulating composition is subject to greater stress in use, so that a composition suitable for potting is not necessarily suitable for encapsulation, but a composition suitable for encapsulation is inevitably suitable for potting.

Ideally, a composition suitable for potting or encapsulation of jet engine blades should have the following properties:

(1)  the composition should have the rigidity of lead at room temperature or below;
(2)  the composition should be injectable and have a set up time of about 2—3 minutes;
(3)  the composition should have minimum shrinkage and not be appreciably soluble in machining coolants;
(4)  the composition should be easily removable from machined parts in such a manner as not to damage the parts (any residual composition should not attack the parts or workpieces or coatings thereon at temperatures as high as 2000°F, or about 1100°C);
(5)  the composition should be nontoxic, nonflammable and relatively odourless;
(6)  the composition should be relatively inexpensive and reusable;
(7)  the composition should have good shelf life and a pot life at application temperature; and
(8)  the composition should be capable of forming a sequentially cast coherent body.

Compositions which have been proposed for potting or encapsulating workpieces are low-melting alloys (as disclosed in U.S. Patents 3790152 and 3982430) and compositions based on organic waxes or thermoplastics (as disclosed in U.S. Patent 3897535).

Low-melting alloys often present problems because of their weight and because they tend to contaminate workpieces; they are also very expensive.

The process of holding a workpiece in a workholder using an organic wax or thermoplastic composition disclosed in the above-mentioned U.S. Patent 3897535 comprises disposing ceramic stones or glass balls of substantial diameter (1/8 to 1/5 of an inch, or 3 to 5 mm) in the workholder, pouring molten organix wax or thermoplastic composition around the workpiece and quenching the resulting assembly at a temperature of 40°F to 73°F (1 to 23°C).

This process has a number of disadvantages: in particular, it is inconvenient that separate operations are necessary to fill the workholder cavity with ceramic stones or glass balls and then to recover the stones or balls from the encapsulant or potting composition. Furthermore, it is inconvenient to have to handle very hot stones or balls (at temperatures of about 800°F, or about 400°C, for example).

Furthermore, because relatively large balls or stones are used in the prior art method and because relatively large sections of resin of low thermal conductivity are used, the time needed for quenching the workholder and the encapsulant or potting composition is relatively high (5 to 10 minutes). It would be advantageous to reduce this time as much as possible, for example to 2 to 3 minutes.

We have now developed an improved composition which may be used for the encapsulation or potting of workpieces without it being necessary to preheat the workholder and the workpiece with ceramic stones or glass balls, and which enables the quenching time to be substantially reduced in comparison with the prior art method.

According to the invention, there is provided a thermoplastic hot melt composition, characterised in that it comprises:

(a) 5 to 20 parts by weight of dicarboxylic acid having 32 to 40 carbon atoms;

(b) 10 to 20 parts by weight of a polymer of olefinic hydrocarbons having 5 to 6 carbon atoms;

(c) 10 to 20 parts by weight of a non-polar aromatic hydrocarbon polymer having a softening point (as measured by the ring and ball method) in the range 98 to 115°C; and

(d) a finely divided inorganic filler having a particle size such that at least 95% by weight thereof passes through a 200 mesh (U.S. Series) screen (preferably such that at least 95% by weight thereof passes through a 325 mesh (U.S. Series) screen), the amount of the inorganic filler being in the range 5 to 70% (preferably 50 to 70%) based on the weight of the composition, and being less than tne Critical Pigment Volume Concentration (as defined hereinafter).

2

The dicarboxylic acid, which functions as a plasticiser for the composition and improves the adhesion and cohesion thereof, making the composition less friable, is preferably a dimeric fatty acid of at least one unsaturated monocarboxylic fatty acid having from 16 to 20 atoms, such as linoleic acid. Preferred such dimeric fatty acids are dilinoleic acid and a dimerization product of mixed poly-unsaturated fatty acids having 16 to 18 carbon atoms (which dimerization product will be referred to herein as "$C_{16}$ to $C_{18}$ dimer acids").

The polymer of olefinic hydrocarbons is preferably formed from a mixture of mono- and polyunsaturated hydrocarbons having 5 to 6 carbon atoms, such as a copolymer comprising 2-methyl-2-butene and 1,3-pentadiene. Such polymers are known as polyterpenes: the polyterpene preferably has a molecular weight of 1000 to 1400 (more preferably, about 1200) and a ring and ball softening point of 95 to 120°C (more preferably, about 100°C). Such polyterpenes are non-polar and tacky and enhance the cohesion of the hot melt composition, and have good heat stability. The polyterpene preferably has a low acid number (less than 1.0) and a very low ash content (not more than 0.1% by weight).

An example of a suitable polyterpene is commercially available under the Trade Mark "Wingtack". This latter polyterpene has the following analysis:

| | |
|---|---|
| 2-pentene | 4.8% by weight |
| 2-methyl-2-butene | 42.2% by weight |
| Isoprene | 2.5% by weight |
| 1,3-pentadiene | 42.4% by weight |
| 2,3-dimethyl-1-butene | 2.3% by weight |
| Other unsaturated $C_5$ to $C_6$ hydrocarbons | 5.5% by weight. |

The non-polar aromatic hydrocarbon polymer is preferably derived from petroleum hydrocarbons, for example, by known catalytic polymerisation methods. These polymers are generally commercially available as solid flake materials. The polymer preferably has a Gardner-Holt viscosity as a 70% solution in toluene at 25°C of R—U; a suitable polymer is commercially available under the Trade Mark "Picco-6100".

The aromatic hydrocarbon polymer preferably has a ring and ball softening point of 98 to 102°C, an acid number of less than 1 and a saponification number of less than 1.

The hot melt composition according to the invention preferably contains substantially equal numbers of parts by weight of the aromatic hydrocarbon polymer and of the polymer of olefinic hydrocarbons.

Particularly when the composition according to the invention is to be used for encapsulation, it preferably contains an alkyl ether of cellulose having 1 to 3 carbon atoms in the alkyl group and at least one monocarboxylic acid having 10 to 20 carbon atoms. The inclusion of these ingredients improves the injection moulding characteristics of the composition; the monocarboxylic acid serves as a solubilizer for the cellulose ether.

The cellulose ether (for example, methyl cellulose, n-propyl cellulose, iso-propyl cellulose or ethyl cellulose, the latter being preferred) is preferably present in the composition in an amount of 2.5 to 8 parts by weight, more preferably 4 to 5 parts by weight.

The monocarboxylic acid may be, for example, a saturated acid, such as decanoic acid, lauric acid, myristic acid, stearic acid, palmitic acid or arachidic acid and/or an unsaturated acid, such as oleic acid, linoleic acid, eleostearic acid or gadoleic acid. The monocarboxylic acid is preferably present in the composition in an amount of from 2 to 5 parts by weight.

The composition according to the invention may contain other organic ingredients, such as bodying agents, plasticisers or antioxidants, the latter being in an amount of up to 0.5 part by weight, preferably 0.05 to 0.4 part by weight, for example, about 0.1 part by weight of 4,4'-methylene bis (2,6-di-tert.-butylphenol).

As mentioned above, the composition according to the invention contains 5 to 70%, preferably 50 to 70%, based on the weight of the composition, of a finely divided inorganic filler having a particle size such that at least 95% thereof passes through a 200 mesh (U.S. Series) screen, preferably such that at least 95% passes through a 325 mesh (U.S. Series) screen.

The upper limit of the concentration of the filler is critical for the integrity of the composition; if too much filler is included, then there is insufficient resinous material to bind the composition. This critical upper limit is known as the "Critical Pigment Volume Concentration" (CPVC) a term which is used in paint technology when referring to a pigment in a drying oil vehicle. The CPVC for a filler can be readily determined by those skilled in the art. The CPVC is dependent upon a number of factors including the nature of the resin, the particle size of the filler, and the crystalline form of the filler. For more details of CPVC, reference is made to the paper by Van Loo delivered at the Mattiello Lecture in 1956 and published in the December 1956 issue of the Official Digest of Paint and Varnish Clubs and entitled "Physical Chemistry of Paint Coatings, a Constant Search — Critical Pigment Volume Concentration", Asbeck et al. i. & E. Chem. vol. 41, page 1470, 1949 and U.S. Pat. No. 2,751,782.

The lower limit of concentration of the filler is not critical, although at least 5% by weight thereof is required before significant advantage in quench time and in shrinkage characteristic is realised. Best results are secured when the weight % of the inorganic filler is in the range of 50% to 70% of the entire composition for inorganic fillers having a density of 2 to 6. This corresponds to a volume ratio of filler to resin in the range of 20% to about 40% for materials such as aluminium oxide.

Any finely divided inert inorganic filler material may be used in the compositions according to the invention in an amount up to its CPVC as described above. Specific examples of inorganic filler materials include metal oxides such as aluminium oxide, zirconium oxide, silicon dioxide, iron oxide, barium oxide, calcium oxide or magnesium oxide; carbonates such as calcium carbonate, magnesium carbonate or barium carbonate; sulphates such as magnesium sulphate, barium sulphate, calcium sulphate; silicates such as calcium silicate, hydrous aluminium silicate, magnesium silicate; asbestos powder or glass fibres; metal powders, e.g. aluminium, iron, steel or copper; clays, such as Fuller's earth, china clay or attapulgite clay. Mixtures of two or more fillers may be used if desired. The nature of the workpiece and its susceptibility to contamination will dictate the kind of inorganic filler used. Aluminium oxide, for example, is particularly satisfactory for use when the composition is used for potting jet engine blades. Preferred inorganic fillers are finely divided ceramic oxides, e.g. aluminium oxide, beryllia, zirconia or calcium carbonate.

The inorganic filler has three main effects in compositions according to the invention, i.e. to reduce the cool time when the compositions are used for potting and encapsulation; to reduce the cost of the composition and to minimise shrinkage of the resin.

In making the potting compositions of the present invention, the organic ingredients are preferably added separately at elevated temperatures followed by mechanical stirring in of the inorganic filler over a relatively long period. For example, in a preferred procedure, the dimer acid is generally heated and stirred in a suitable cooking vessel to about 250°F (121°C); the polyterpene is then added and stirred in and the temperature raised to 300°F (149°C); the aromatic hydrocarbon polymer is then added and stirred and the temperature elevated to 350°F (177°C). Some foaming or bubbling may be experienced at this point. The cellulose ether and monocarboxylic acid, if used, may then be added. Thereafter, the finely divided inorganic filler is added with stirring while the temperature is held between about 345° to 355°F (174°—180°C) for a period of 4 to 5 hours.

As mentioned above, the composition according to the invention may be used for holding a workpiece in a workholder; a preferred process comprises introducing the composition in a molten state (preferably at 120 to 150°C) into a cavity between the workpiece and the workholder so as to surround at least part of the workpiece, and quenching the workpiece, workholder and composition so as to solidify the composition. The workpiece may then be machined as desired.

The composition can be recovered after use by remelting (and, preferably washing the workpiece); it is not necessary to recover the filler separately.

The molten composition can be introduced into the cavity by casting or by injection moulding; conventional apparatus may be used.

The method of holding a workpiece using a composition according to the invention will be described in more detail with reference to the accompanying drawings, in which:

Figures 1a, 1b and 1c are diagrammatic and schematic illustrations of successive stages in an example of the method of the present invention;

Figure 2 is an end view in cross section of a workpiece which has been potted according to the invention with the "scissors" and sprue removed;

Figure 3 represents a "scissors" closure for a potting box adapted for a cylindrical workpiece; and

Figure 4 represents a "scissors" closure for a potting box adapted for an airfoil for a jet engine.

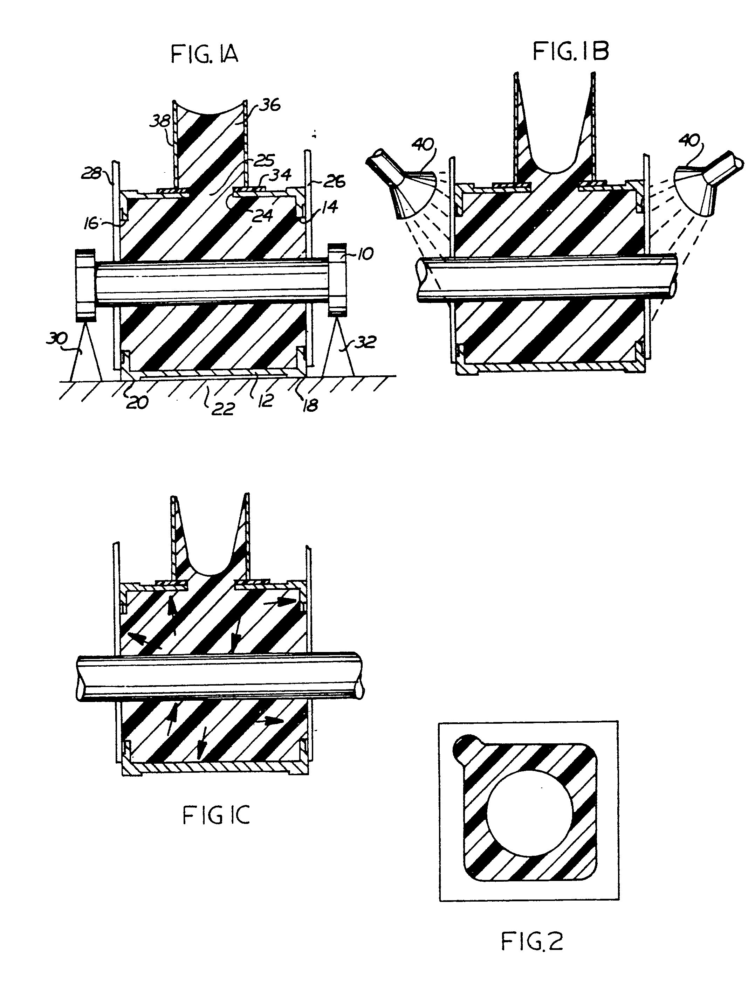

Referring to Figure 1a, there is shown in diagrammatic form a potting or matrix box 12 (which may be of cast iron, for example) having opposed openings 14 and 16 of sufficient dimension to allow at least one end of a workpiece 10 to pass freely therethrough. The box 12 is provided with ground flats, e.g. flats 18 and 20, for proper location on a fixturing table 22, and with an inlet opening 24 for admitting a potting composition 25 as described below. End closures 26 and 28, which are designated "scissors" for reasons whch will become apparent, are provided to close the openings 14 and 16 and accommodate the projectng ends of the workpiece 10. Suitable clamps, not shown, hold the scissors closures 26 and 28 in place.

The workpiece is supported on suitable fixturing mounts or pedestals 30 and 32 diagrammatically shown in Figure 1a for maintenance of proper location of the workpiece 10 in the matrix box 12 during the potting operation.

The apparatus is completed with a PTFE collar 34 to facilitate removal of a sprue 36, and a filler pipe 38 to aid in introducing the potting composition 25. Pipe 38 also provides a reservoir for additional composition 25 as may be required during shrinkage in cooling as described below.

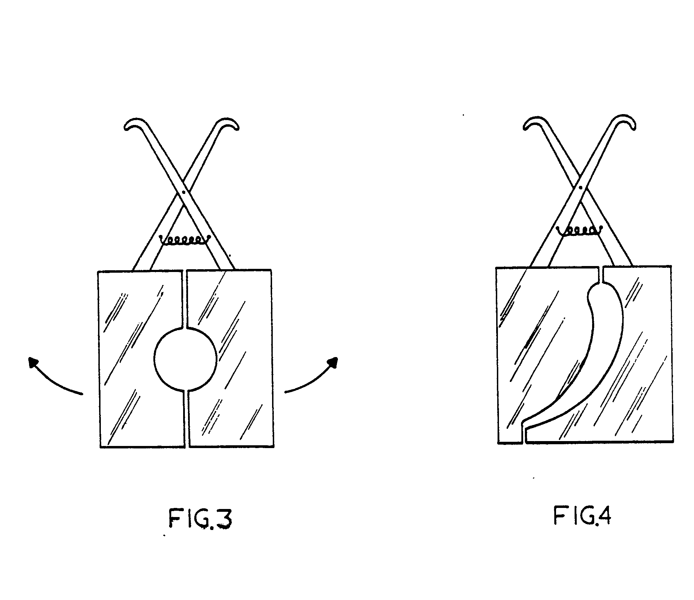

In practice, the workpiece 10, e.g. a jet engine turbine blade or airfoil, is inserted through the openings 14 and 16 in the matrix box 12. Both the workpiece 10 and the matrix box 12 are preferably preheated to a temperature of from about 115°F to about 130°F (46—55°C) and mounted in a fixturing assembly to properly locate the workpiece 10 relative to the matrix box 12. The preheat temperature should not be too high, in order to avoid injury to operators. The end closures 26 and 28 or "scissors" such as shown in Figures 3 and 4 are put in place and clamped to close the openings 14 and 16 and contain the hot resinous melt in the matrix box 12. The collar 34 is placed around the opening 24 and the preferably preheated metal inlet pipe 38 superposed. The function of the pipe 38 is to contain a volume of the potting composition 25 in excess of that required to fill the matrix box 12 with the workpiece in place. This excess provides a hydrostatic head for urging flow of the hot melt composition to all portions of the box 12 and to provide an additional volume to keep the box filled during contraction of the composition 25 which occurs upon cooling.

The composition, which flows at elevated temperatures in the range of 250°F to 300°F (120—150°C), is poured preferably at from 250°F—270°F (120—132°C) into the preheated box 12 to fully pot the workpiece (until pipe 38 is nearly full), and is set by quenching the box 12 and the projecting portion or portions of the workpiece 10 with water.

Water quenching may be accomplished either by immersing the entire assembly in cold water, or flooding the apparatus with water by means of a drenching spray system generally indicated 40 (Figure 1b) or a combination of both simultaneously or sequentially carried out. Application of cooling water to the pipe 38 should be avoided during the filling operation and until set is achieved. The potted part 10 must remain in the fixturing device 20, 30 and 32, for example until cooled sufficiently that the potted part 10 will not move as a result of melt contraction during subsequent cooling. The water coolant should be preferably at a temperature of from 45° to 55°F (7°—13°C). After the composition sets hard so that no movement of the workpiece 10 relative to the box 12 occurs, the "scissors" 26 and 28 are released, the filler pipe 38 knocked off, and the cooled potted workpiece 10 and box 12 assembly removed from the fixturing device for acceptance of a succeeding assembly in the fixturing device. The residence time in the fixturing device is controlled by the set time of the composition 25 and this time should not exceed 2—3 minutes. Otherwise, there is a severe limitation imposed on production, the cost of which is, of course, substantial.

Cooling of the box 12 and the workpiece 10 after potting causes a slight shrinkage of these parts 10 and 12. However, the filled organic resinous composition has a substantially greater shrinkage thus continuously drawing in additional amounts of melt from the reservoir pipe 38. As the entire system warms back to room temperature, the expansion of both the workpiece 10 and the organic resinous composition causes pressure contact of the composition with the tool 10 and the box 12.

Although preheating of the box 12 and the workpiece 10 is not required, it does promote adhesion of the organic resinous composition to the metal surface. It also allows a lowering of the melt casting temperature. The temperature of the preheat should not be so high as to unduly increase the subsequent cool down time from the referred 2—3 minutes to solidification. A temperature of 115—130°F (46°—55°C) is usually sufficient and the parts at these temperatures can be handled without gloves.

In order that the invention may be more fully understood, the following Examples are given by way of illustration only.

Example 1

A composition was made of the following ingredients:

| Material | Parts by weight |
| --- | --- |
| Dilinoleic acid | 10 |
| $C_5$—$C_6$ terpene hydrocarbon polymer | 12 |
| Aromatic hydrocarbon polymer | 13 |
| Aluminium oxide (—325 mesh) | 65 |

The composition was prepared by the sequential melt blending of the organic ingredients in the order given, to produce a homogeneous and compatible molten mass. The aluminium oxide was then added over 4 to 5 hours while maintaining the melt temperature 174 to 179°C (345 to 355°F) so as to obtain a viscosity conductive to good mixing and pourability. Volatilisation of any solvent unreacted monomer, depolymerisation products or water may have occurred during heating while blending the hydrocarbon polymers.

The resulting composition had a pour temperature in the range of 250—260°F (120°—127°C) and a breaking load of about 5000 lbs (about 2.25 tonnes). For fixturing a jet engine blade, a cool down time to set of 2—3 minutes was obtained after which removal from the fixturing jib can be done with further spontaneous or forced cooling. The amount of aluminium oxide is just below the CPVC for the system.

Example 2

Example 1 was repeated, using the following ingredients:

| Material | Parts by weight |
| --- | --- |
| $C_{16}$—$C_{18}$ dimer acids | 9 |
| $C_5$ terpene hydrocarbon polymer (Wingtack 95) | 11 |
| Picco-6100 (aromatic hydrocarbon polymer) | 12 |
| Aluminium oxide (—325 mesh) | 68 |

This example is illustrative of about the maximum amount of aluminium oxide which can be used satisfactorily in the particular resin combination. At over 70% concentration of aluminium oxide, the composition is too weak for satisfactory potting. This latter concentration corresponds to a CPVC of about 32%.

Example 3

Example 1 was repeated, using the following ingredients:

| Material | Parts by weight |
| --- | --- |
| $C_{16}$—$C_{18}$ dimer fatty acids | 10 |
| Dipentene polyterpene (M.W. 1100) | 20 |
| Picco 6100 (aromatic hydrocarbon polymer) | 20 |
| Aluminium oxide (—325 mesh) | 50 |

This composition was satisfactory as a fixturing compound, but is somewhat more expensive than the composition of Example 2 above. The amount of alumina is below the CPVC for the system.

Example 4

Example 1 was repeated using the following ingredients:

| Material | Parts by weight |
| --- | --- |
| Dilinoleic acid | 13 |
| "Wingtack 95" ($C_5$—$C_6$ polyterpene) | 41 |
| Picco 6100 (aromatic hydrocarbon polymer) | 41 |
| Aluminium oxide (—325 mesh) | 5.0 |

This composition was satisfactory as a potting compound but is expensive and requires cooling water at about 35° to 38°F (about 1.5 to 3°C) to obtain a satisfactorily short cooling time. Higher concentrations of aluminium oxide provide shorter cooling times and reduce the cost of the fixturing composition. The amount of alumina is well below the CPVC of the system.

# 0 001 497

## Example 5

Example 1 was repeated, using the following ingredients

| Material | Parts by weight |
| --- | --- |
| Dilinoleic acid ("Empol-1022" Emery Co.) | 5.0 |
| Stearic acid | 3.5 |
| $C_5$—$C_6$ hydrocarbon polymer ("Wingtack 95", Goodyear) | 13.9 |
| Aromatic hydrocarbon polymer (Picco 6100, Hercules) | 13.0 |
| Aluminium oxide | 60 |
| 4,4'-methylene bis (2,6-di-tert.-butylphenol (antioxidant) | 0.1 |
| Ethyl cellulose | 4.5 |

The resulting composition was suitable for encapsulating jet engine airfoils.

## Example 6

Example 1 was repeated using the following ingredients:

| Material | Parts by weight |
| --- | --- |
| $C_{16}$—$C_{18}$ dimer fatty acids | 7 |
| $C_5$ terpene hydrocarbon polymer ("Wingtack 95") | 10 |
| Aromatic hydrocarbon polymer (Picco 6100) | 10 |
| Ethyl cellulose | 3 |
| Stearic acid | 2 |
| Aluminium oxide (—325 mesh) | 68 |

The resulting composition was satisfactory for use as an encapsulating compound.

## Example 7

Example 1 was repeated, using the following ingredients:

| Material | Parts by weight |
| --- | --- |
| $C_{16}$—$C_{18}$ dimer fatty acids | 13 |
| Polyterpene (MW 1100) | 17 |
| Aromatic hydrocarbon polymer (Picco 6100) | 15 |
| Propyl cellulose | 8 |
| Palmitic acid | 2 |
| Silica (—325 mesh) | 44.9 |
| Antioxidant | 0.1 |

7

The resulting composition was satisfactory as an encapsulating compound, somewhat more expensive than the composition of Example 5. The amount of silica is below the CPVC for the system.

An example of a method of potting jet engine airfoils, using the apparatus shown in Figures 1, 2 and 3 will now be described. The airfoil 10 and matrix box 12 are degreased by a known procedure, and each preheated to 125°F to 130°F (51.7 to 54.4°C) in a suitable electric oven. The removable inlet pipe 38 is similarly preheated. The composition of any of the foregoing Examples (e.g. Example 1) is heated to 255°F (124°C) in a suitable agitated pot. It is desirable also to preheat the spigot on the melt pot to at least 200°F (93°C).

The airfoil 10 and matrix box 12 are clamped in a suitable locating holder, closure scissors 26, 28 attached to the collar 34 and inlet pipe 38 put into place, and composition 25 flowed into the box 12 until the inlet pipe 38 is nearly full. The water spray units 40 are operated at about 55°F (about 13°C) after filling. The matrix box 12 with the airfoil 10 and composition after removing scissors is then immediately immersed in cold water at about 60°F (about 15.5°C) where it remains for 3 minutes.

Thereafter the removable pipe 38 and the collar 34 are removed and the assembly dried and gauged for location of the workpiece in the matrix. The potted airfoil and matrix is then set aside to regain room temperature. The workpiece can then be machined.

When completed, the fixtured part assembly may be reheated to about 250°F—300°F (121 to 149°C) the workpiece 10 recovered and washed with a suitable solvent (toluene), and the potting composition returned to the melting pot for re-use.

## Claims

1. A thermoplastic hot melt composition, characterised in that it comprises:

(a) 5 to 20 parts by weight of a dicarboxylic acid having 32 to 40 carbon atoms;

(b) 10 to 20 parts by weight of a polymer of olefinic hydrocarbons having 5 or 6 carbon atoms;

(c) 10 to 20 parts by weight of a non-polar aromatic hydrocarbon polymer having a softening point (as measured by the ring and ball method) in the range 98 to 115°C; and

(d) a finely divided inorganic filler having a particle size such that at least 95% by weight thereof passes through a 200 mesh (U.S. Series) screen, the amount of the inorganic filler being in the range 5 to 70%, based on the weight of the composition, and being less than the Critical Pigment Volume Concentration.

2. A composition according to claim 1, characterised in that the dicarboxylic acid is a dimeric fatty acid of at least one unsaturated monocarboxylic fatty acid having from 16 to 20 carbon atoms.

3. A composition according to claim 2, characterised in that the unsaturated monocarboxylic fatty acid is linoleic acid.

4. A composition according to any of claims 1 to 3, characterised in that the polymer of olefinic hydrocarbons is a polyterpene having a molecular weight of 1000 to 1400 and a softening point (as measured by the ring and ball method) of 95 to 120°C.

5. A composition according to any of claims 1 to 4, characterised in that the softening point of the aromatic hydrocarbon polymer is not more than 102°C (as measured by the ring and ball method) and in that the aromatic hydrocarbon polymer has an acid number less than 1 and a saponification value of less than 1.

6. A composition according to any of claims 1 to 5, characterised in that it also contains 2.5 to 8 parts by weight of an alkyl ether of cellulose having 1 to 3 carbon atoms in the alkyl group and 2 to 5 parts by weight of a monocarboxylic acid having 10 to 20 carbon atoms.

7. A composition according to claim 6, characterised in that the alkyl ether of cellulose is ethyl cellulose.

8. A composition according to any of claims 1 to 7, characterised in that the inorganic filler is a ceramic oxide.

9. A composition according to claim 8, characterised in that the ceramic oxide is aluminium oxide.

10. A composition according to any of claims 1 to 9, characterised in that the inorganic filler has a particle size such that at least 95% by weight thereof passes through a 325 mesh (U.S. Series) screen.

11. A method of holding a workpiece positioned in a workholder, which comprises introducing a molten composition into the workholder to surround at least part of the workpiece, and quenching the workholder, workpiece and composition so as to solidify the latter, characterised in that the molten composition is as claimed in any of claims 1 to 10 and is introduced into the workholder at a temperature of 120 to 150°C.

## Revendications

1. Composition thermoplastique fusible à chaud, caractérisée en ce qu'elle est constituée de:

a) 5 à 20 parties en poids d'un acide dicarboxylique ayant 32 à 40 atomes de carbone;

b) 10 à 20 parties en poids d'un polymère d'hydrocarbures oléfiniques ayant 5 ou 6 atomes de carbone;

c) 10 à 20 parties en poids d'un hydrocarbure polymère aromatique non polaire ayant un point de ramollissement (mesuré selon la méthode bille et anneau) compris entre 98 et 115°C; et

d) une charge minérale finement divisée ayant une taille des particules telle qu'elles passent au moins à 95% en poids à travers un tamis de 74 $\mu$m d'ouverture de maille, la quantité de la charge minérale étant comprise entre 5 et 70% par rapport au poids de la composition et étant inférieure à la Concentration Volumétrique Critique en Pigment.

2. Composition selon la revendication 1, caractérisée en ce que l'acide dicarboxylique est un acide gras dimère d'au moins un acide gras monocarboxylique insaturé ayant 16 à 20 atomes de carbone.

3. Composition selon la revendication 2, caractérisée en ce que l'acide gras monocarboxylique insaturé est l'acide linoléique.

4. Composition selon une quelconque des revendications 1 à 3, caractérisée en ce que le polymère d'hydrocarbures oléfiniques est un polyterpène ayant un poids moléculaire de 1000 à 1400 et un point de ramollissement (mesuré selon la méthode bille et anneau) de 95 à 120°C.

5. Composition selon l'une quelconque des revendications 1 à 4, caractérisée en ce que le point de ramollissement de l'hydrocarbure polymère aromatique ne dépasse pas 102°C (mesuré selon la méthode bille et anneau) et en ce que l'hydrocarbure polymère aromatique a un indice d'acide inférieur à 1 et un indice de saponification inférieur à 1.

6. Composition selon l'une quelconque des revendications 1 à 5, caractérisée en ce qu'elle contient également 2,5 à 8 parties en poids d'un éther alkylique de cellulose ayant 1 à 3 atomes de carbone dans le radical alkyle et 2 à 5 parties en poids d'un acide monocarboxylique ayant 10 à 20 atomes de carbone.

7. Composition selon la revendication 6, caractérisée en ce que l'éther alkylique de la cellulose est l'éthylcellulose.

8. Composition selon l'une quelconque des revendications 1 à 7, caractérisée en ce que la charge minérale est un oxyde céramique.

9. Composition selon la revendication 8, caractérisée en ce que l'oxyde céramique est l'oxyde d'aluminium.

10. Composition selon l'une quelconque des revendications 1 à 9, caractérisée en ce que la charge minérale a une taille des particules telle qu'elles passent au moins à 95% en poids à travers un tamis de 44 $\mu$m d'ouverture de maille.

11. Procédé pour maintenir une pièce à travailler dans un porte-pièce qui consiste à introduire une composition fondue dans le porte-pièce, pour entourer au moins une partie de la pièce à travailler, et à refroidir rapidement le porte-pièce, la pièce à travailler et la composition pour solidifier cette dernière, caractérisé en ce que la composition fondue est une composition selon l'une quelconque des revendications 1 à 10 que l'on introduit dans le porte-pièce à une température de 120 à 150°C.

**Patentansprüche**

1. Thermoplastische Hitzeschmelzzusammensetzung, dadurch gekennzeichnet, daß sie aufweist

(a) 5 bis 20 Gewichtsteile einer Dicarbonsäure mit 32 bis 40 Kohlenstoffatomen,

(b) 10 bis 20 Gewichtsteile eines Polymeren aus olefinischen Kohlenwasserstoffen mit 5 oder 6 Kohlenstoffatomen,

(c) 10 bis 20 Gewichtsteile eines unpolaren aromatischen Kohlenwasserstoffpolymeren mit einem Erweichungspunkt (gemessen nach der Ring-/Kugel-Methode) im Bereich von 98 bis 115°C und

(d) einen fein verteilten, organischen Füllstoff mit solch einer Teilchengröße, daß mindestens 95 Gewichtsprozent davon ein 74 $\mu$m (200 mesh)-Sieb passieren, wobei die Menge des anorganischen Fullstoffes im Bereich von 5 bis 70%, bezogen auf das Gewicht der Zusammensetzung, und unterhalb der kritischen Pigmentvolumenkonzentration liegt.

2. Zusammensetzung nach Anspruch 1, dadurch gekennzeichnet, daß die Dicarbonsäure eine dimere Fettsäure mindestens einer ungesättigten, einbasischen Fettsäure mit 16 bis 20 Kohlenstoffatomen ist.

3. Zusammensetzung nach Anspruch 2, dadurch gekennzeichnet, daß die ungesättige, einbasische Fettsäure Linolsäure ist.

4. Zusammensetzung nach mindestens einem der Ansprüche 1 bis 3, dadurch gekennzeichnet, daß das Polymer aus olefinischen Kohlenwasserstoffen ein Polyterpen mit einem Molekulargewicht von 1000 bis 1400 und einem Erweichungspunkt (gemessen nach der Ring-/Kugel-Methode) von 95 bis 120°C ist.

5. Zusammensetzung nach mindestens einem der Ansprüche 1 bis 4, dadurch gekennzeichnet, daß der Erweichungspunkt des aromatischen Kohlenwasserstoffpolymeren nicht mehr als 102°C (gemessen nach der Ring-/Kugel-Methode) beträgt und daß das aromatische Kohlenwasserstoffpolymer eine Säurezahl von weniger als 1 und eine Verseifungszahl von weniger als 1 aufweist.

6. Zusammensetzung nach mindestens einem der Ansprüche 1 bis 5, dadurch gekennzeichnet, daß sie ebenso 2,5 bis 8 Gewichtsteile eines Zellulosealkyläthers mit 1 bis 3 Kohlenstoffatomen in der Alkylgruppe und 2 bis 5 Gewichtsteile einer Monocarbonsäure mit 10 bis 20 Kohlenstoffatomen enthält.

7. Zusammensetzung nach Anspruch 6, dadurch gekennzeichnet, daß der Zellulosealkyläther Äthylzellulose ist.

8. Zusammensetzung nach mindestens einem der Ansprüche 1 bis 7, dadurch gekennzeichnet, daß der anorganische Füllstoff ein Keramikoxid ist.

9. Zusammensetzung nach Anspruch 8, dadurch gekennzeichnet, daß das Keramikoxid Aluminiumoxid ist.

10. Zusammensetzung nach mindestens einem der Ansprüche 1 bis 9, dadurch gekennzeichnet, daß der anorganische Füllstoff solch eine Teilchengröße aufweist, daß mindestens 95 Gewichtsprozent davon eine 44 $\mu$m (325 mesh)-Sieb passieren.

11. Verfahren zum Festhalten eines in einer Werkstückhalterung befindlichen Werkstückes, wobei man eine geschmolzene Zusammensetzung in die Werkstückhaltung einbringt, um das Werkstück mindestens teilweise zu umgeben und die Werkstückhaltung, das Werkstück und die Zusammensetzung abschreckt, um so die letztere zu verfestigen, dadurch gekennzeichnet, daß eine geschmolzene Zusammensetzung nach mindestens einem der Ansprüche 1 bis 10 verwendet wird und in die Werkstückhalterung bei einer Temperatur von 120 bis 150°C eingebracht wird.

FIG. IA

FIG. IB

F IG IC

FIG.2

FIG.3

FIG.4